# FASCICULE DE BREVET EUROPEEN

(11) **EP 3 834 675 B1**
(45) Date de publication et mention de la délivrance du brevet: **02.11.2022**
(21) Numéro de dépôt: 20213604.0
(22) Date de dépôt: 11.12.2020
(51) Int. Cl.: A47J 27/00, A47J 43/046

(54) **APPAREIL DE CUISSON ÉLECTRIQUE POUR CUIRE DES ALIMENTS COMPRENANT UNE PALE DE BRASSAGE**
ELEKTRISCHES KOCHGERÄT ZUM KOCHEN VON LEBENSMITTELN MIT RÜHRSCHAUFEL
ELECTRIC COOKING APPLIANCE FOR COOKING FOOD COMPRISING A STIRRING BLADE

(30) Priorité: 13.12.2019 FR 1914363
(43) Date de publication de la demande: 16.06.2021
(73) Titulaire: SEB S.A., 69130 Ecully (FR)
(72) Inventeur: BLANDIN, Loïc, 69003 Lyon (FR); PICHOT, Renaud, 69008 Lyon (FR)
(74) Mandataire: SEB Développement

(56) Documents cités:
- JP-A- 2011 156 200
- US-A1- 2018 126 339
- US-A1- 2019 125 124

## Description

### Domaine technique

La présente invention concerne de manière générale un appareil de cuisson électrique pour cuire des aliments avec ou sans pression, tel qu'un autocuiseur ou un autocuiseur électrique.

### Etat de la technique

Le document WO2015/129254 divulgue un appareil de cuisson électrique comprenant :
- une cuve de cuisson configurée pour recevoir des aliments à cuire,
- une pale de brassage montée mobile en rotation dans la cuve de cuisson, la pale de brassage comportant une partie centrale et plusieurs bras de brassage qui s'étendent à partir de la partie centrale et qui sont configurés pour brasser des aliments contenus dans la cuve de cuisson,
- un système d'entraînement magnétique configuré pour entraîner en rotation la pale de brassage, et
- un dispositif de chauffage qui est disposé en dessous de la cuve de cuisson et qui est configuré pour chauffer la cuve de cuisson.

Le système d'entraînement magnétique de l'appareil de cuisson électrique précité comporte un aimant permanent disposé dans la partie centrale de la pale de brassage, et une unité de génération de champ magnétique tournant qui est disposée en dessous de la paroi de fond de cuve de cuisson, et donc à proximité du dispositif de chauffage.

Une telle configuration du système d'entraînement magnétique permet d'entraîner en rotation la pale de brassage sans nécessiter la présence d'un arbre d'entraînement s'étendant à travers la paroi de fond de la cuve de cuisson, et donc d'éviter des problèmes d'étanchéité au niveau de la paroi de fond de la cuve de cuisson.

Toutefois, le positionnement de l'unité de génération de champ magnétique tournant à proximité du dispositif de chauffage et le positionnement de l'aimant permanent à proximité de l'axe de rotation de la pale de brassage nécessitent de surdimensionner l'unité de génération de champ magnétique tournant et l'aimant permanent afin d'assurer la transmission d'un couple magnétique satisfaisant à la pale de brassage. Un tel surdimensionnement du système d'entraînement magnétique augmente de manière sensible l'encombrement de l'appareil de cuisson électrique et son coût.

Lorsque la configuration de l'appareil de cuisson électrique ne permet pas de surdimensionner le système d'entraînement magnétique ou que l'on recherche à minimiser les coûts de matière première pour la fabrication, notamment des aimants, alors le couple magnétique transmis à la pale de brassage peut s'avérer insuffisant pour assurer un brassage satisfaisant des aliments contenus dans la cuve de cuisson. Un décrochage de la pale de brassage peut également survenir.

Il est également connu du document US-A-2018/0126339, une machine pour homogénéiser une substance alimentaire comprenant :
- un boitier comportant une cuve de chauffe configurée pour recevoir des aliments à chauffer,
- un dispositif de brassage monté mobile en rotation dans la cuve de chauffe, et
- un système d'entraînement magnétique configuré pour entrainer en rotation le dispositif de brassage, le système d'entraînement magnétique comprenant une couronne périphérique s'étendant autour de la paroi latérale de la cuve de chauffe, un premier dispositif magnétique permanent fixe à la couronne périphérique, un deuxième dispositif magnétique permanent fixe au dispositif de brassage et configuré pour coopérer avec le premier dispositif magnétique permanent, et un moteur d'entraînement configuré pour entrainer en rotation la couronne périphérique autour de la paroi latérale de la cuve de chauffe, le système d'entrainement magnétique étant configuré pour entraîner en rotation le dispositif de brassage lorsque le deuxième dispositif magnétique permanent est placé en regard du premier dispositif magnétique permanent et lorsque le moteur d'entrainement entraîne en rotation la couronne périphérique.

### Résumé de l'invention

La présente invention vise à remédier à tout ou partie de ces inconvénients. Le problème technique à la base de l'invention consiste notamment à fournir un appareil de cuisson électrique qui soit compact, présentant un coût raisonnable, tout en assurant un brassage satisfaisant des aliments contenus dans la cuve de cuisson d'un tel appareil de cuisson électrique.

A cet effet, la présente invention concerne un appareil de cuisson électrique comprenant :
- un boîtier comportant une cuve de cuisson configurée pour recevoir des aliments à cuire,
- une pale de brassage montée mobile en rotation dans la cuve de cuisson, la pale de brassage comportant au moins un bras de brassage qui est configuré pour brasser des aliments contenus dans la cuve de cuisson, le bras de brassage comportant une portion d'extrémité configurée pour s'étendre à proximité ou au contact d'une paroi latérale de la cuve de cuisson, et
- un système d'entraînement magnétique configuré pour entraîner en rotation la pale de brassage, le système d'entraînement magnétique comprenant une couronne périphérique s'étendant autour de la paroi latérale de la cuve de cuisson, un premier dispositif magnétique permanent fixé à la couronne périphérique, un deuxième dispositif magnétique permanent fixé à la portion d'extrémité du bras de brassage et configuré pour coopérer avec le premier dispositif magnétique permanent, et un moteur d'entraînement configuré pour entraîner en rotation la couronne périphérique autour de la paroi latérale de la cuve de cuisson,
le système d'entraînement magnétique étant configuré pour entraîner en rotation la pale de brassage lorsque le deuxième dispositif magnétique permanent est placé en regard du premier dispositif magnétique permanent et lorsque le moteur d'entraînement entraîne en rotation la couronne périphérique.

Une telle configuration du système d'entraînement magnétique, et notamment la disposition du premier dispositif magnétique permanent sur la couronne périphérique disposé autour de la paroi latérale de la cuve de cuisson, permet de transmettre un couple magnétique élevé à la pale de brassage (en comparaison en particulier avec un couple magnétique généré au niveau de l'axe de rotation de la pale de brassage), et donc d'assurer une rotation efficace de la pale de brassage, y compris lorsqu'une quantité importante d'aliments est reçue dans la cuve de cuisson.

En outre, une telle disposition des premier et deuxième dispositifs magnétiques permanents permet de sous-dimensionner les premier et deuxième dispositifs magnétiques permanents, et donc de réduire l'encombrement et les coûts de fabrication du système d'entraînement magnétique, tout en assurant un entraînement en rotation satisfaisant de la pale de brassage.

De plus, la localisation périphérique du premier dispositif magnétique permanent permet, lorsque l'appareil de cuisson électrique est équipé d'un dispositif de chauffage disposé sous la cuve de cuisson, d'éloigner le premier dispositif magnétique permanent du dispositif de chauffage, et donc de générer un champ magnétique plus important. En effet, la force d'attraction magnétique générée par un aimant permanent diminue lorsque la température augmente. Il en va de même pour le deuxième dispositif magnétique qui est configuré pour coopérer avec le premier dispositif magnétique permanent. Si l'application d'un champ magnétique plus important n'est toutefois pas souhaitée, il est alors possible de sous-dimensionner encore plus les premier et deuxième dispositifs magnétiques permanents, et donc de limiter encore les coûts de fabrication du système d'entraînement magnétique.

L'appareil de cuisson électrique peut en outre présenter une ou plusieurs des caractéristiques suivantes, prises seules ou en combinaison.

Selon un mode de réalisation, le premier dispositif magnétique permanent et le deuxième dispositif magnétique permanent sont configurés de telle sorte que les premier et deuxième dispositifs magnétiques permanents exercent l'un sur l'autre une force d'attraction magnétique lorsque les premier et deuxième dispositifs magnétiques permanents sont placés en regard l'un de l'autre.

Du fait de leurs dispositions en regard et en opposition de pôles, le premier dispositif magnétique et le deuxième dispositif magnétique exercent mutuellement l'un sur l'autre une force d'attraction magnétique permettant de mettre en rotation la pale de brassage lorsque la couronne périphérique est mise en rotation, ce qui conduit à brasser le contenu de la cuve de cuisson.

Selon un mode de réalisation de l'invention, les premiers dispositifs magnétiques permanents et les deuxièmes dispositifs magnétiques permanents sont agencés de telle sorte que chaque premier dispositif magnétique permanent et chaque deuxième dispositif magnétique permanent complémentaire sont configurés pour exercer mutuellement l'un sur l'autre une force d'attraction magnétique.

Selon un mode de réalisation de l'invention, le premier dispositif magnétique permanent comporte un ou plusieurs premiers aimants permanents, le cas échéant répartis sur la couronne périphérique de manière décalés angulairement les uns par rapport aux autres.

Selon un mode de réalisation de l'invention, le deuxième dispositif magnétique permanent comporte un même nombre d'aimants que le premier dispositif magnétique permanent.

Selon un autre mode de réalisation de l'invention, le premier dispositif magnétique permanent et le deuxième dispositif magnétique permanent sont agencés de telle sorte que la force d'attraction magnétique mutuelle exercée par le premier dispositif magnétique permanent et le deuxième dispositif magnétique permanent placé en regard du premier dispositif magnétique permanent comprend une composante permettant de plaquer le bras de brassage contre une paroi de fond de la cuve de cuisson.

Selon un mode de réalisation de l'invention, le premier dispositif magnétique permanent est disposé à proximité de la paroi de fond de la cuve de cuisson.

Selon un mode de réalisation de l'invention, le premier dispositif magnétique permanent est décalé verticalement par rapport à la paroi de fond de la cuve de cuisson.

Selon un mode de réalisation de l'invention, la portion d'extrémité du bras de brassage comporte un logement de réception dans lequel est logé le deuxième dispositif magnétique permanent. Ces dispositions permettent d'ajouter le deuxième dispositif magnétique permanent dans le bras de brassage après la fabrication de la pale de brassage, et donc de faciliter la fabrication de cette dernière.

Selon un mode de réalisation de l'invention, le logement de réception est hermétique.

Selon un mode de réalisation de l'invention, le deuxième dispositif magnétique permanent est disposé dans un insert qui est monté amovible dans le logement de réception.

Selon un mode de réalisation, le deuxième dispositif magnétique permanent est inséré dans le bras de brassage à la suite d'une étape de surmoulage du deuxième dispositif magnétique permanent.

Selon un mode de réalisation, le premier dispositif magnétique permanent comporte un unique premier aimant permanent et le deuxième dispositif magnétique permanent comporte un unique deuxième aimant permanent, le premier aimant permanent et le deuxième aimant permanent présentant un axe d'aimantation orienté sensiblement radialement par rapport à l'axe de rotation de la couronne périphérique ou de rotation de la pale, le premier aimant permanent et le deuxième aimant permanent étant disposés en opposition de pôle.

Selon un mode de réalisation de l'invention, le premier dispositif magnétique permanent comporte deux premiers aimants permanents, dont l'axe d'aimantation est orienté sensiblement radialement par rapport à l'axe de rotation de la couronne périphérique et qui sont agencés en opposition de pôle, et le deuxième dispositif magnétique permanent comporte deux deuxièmes aimants permanents dont l'axe d'aimantation est orienté radialement par rapport à l'axe de rotation de la pale et qui sont agencés en opposition de pôle, les deux premiers aimants permanents du premier dispositif magnétique permanent étant chacun agencé pour être disposé en regard et en opposition de pôle d'un des deux deuxièmes aimants permanents du deuxième dispositif magnétique perm anent.

Selon un mode de réalisation, la moitié de la distance de l'entrefer entre les deux deuxièmes aimants permanents du deuxième dispositif magnétique permanent est supérieure à l'entrefer entre un deuxième aimant permanent du deuxième dispositif magnétique permanent et un premier aimant permanent du premier dispositif magnétique permanent.

Selon un mod de réalisation, le système d'entraînement magnétique comporte une pluralité de premiers dispositifs magnétiques permanents qui sont fixés à la couronne périphérique et qui sont décalés angulairement les uns par rapport aux autres.

Selon une autre configuration, le premier dispositif magnétique permanent et le deuxième dispositif magnétique permanent pourraient exercer mutuellement l'un sur l'autre une force de répulsion. Le premier dispositif magnétique permanent serait alors disposé en amont du deuxième dispositif magnétique permanent dans le sens de rotation de la couronne périphérique et de la pale. Un tel mode de réalisation nécessiterait en outre un dispositif additionnel configuré pour maintenir la pale sur le fond de la cuve de cuisson. un tel dispositif additionnel a pour fonction de n'autoriser qu'un seul degré de liberté : la rotation, ce qui implique notamment un maintien en fond de cuve.

Selon un tel mode de réalisation de l'invention, la cuve de cuisson comporte un pion de centrage qui s'étend à partir de la paroi de fond de la cuve de cuisson et qui est configuré pour coopérer avec la pale de brassage de manière à centrer la pale de brassage dans la cuve de cuisson et/ou l'appareil de cuisson électrique comporte un aimant central mobile disposé sous une zone centrale de la cuve de cuisson et agencé pour attirer une partie centrale de la pale comprenant une portion ferromagnétique.

Selon un mode de réalisation de l'invention, la pale de brassage comporte une pluralité de bras de brassage, par exemple deux ou trois bras de brassage, qui sont configurés pour brasser des aliments contenus dans la cuve de cuisson, chaque bras de brassage comportant une portion d'extrémité configurée pour s'étendre à proximité ou au contact de la paroi latérale de la cuve de cuisson.

Selon un mode de réalisation, au moins deux bras parmi la pluralité de bras ont des formes différentes.

Cette disposition permet d'optimiser la forme d'un bras pour le brassage d'aliments de petite dimension et d'optimiser la forme d'un autre bras pour le brassage d'aliments de plus grande dimension.

Selon un mode de réalisation de l'invention, les bras de brassage sont décalés angulairement les uns par rapport aux autres. Ces dispositions permettent de positionner la pale de brassage de façon concentrique par rapport à la cuve de cuisson, et donc de se dispenser de la présence d'un pion de centrage prévu sur la paroi de fond de la cuve de cuisson.

Selon un mode de réalisation de l'invention, les bras de brassage sont régulièrement espacés les uns par rapport aux autres. De façon avantageuse, les bras de brassage sont régulièrement répartis autour de l'axe de rotation de la pale de brassage.

Selon un mode de réalisation de l'invention, la pale de brassage comporte trois bras de brassage qui sont régulièrement répartis autour de l'axe de rotation de la pale de brassage.

Selon un mode de réalisation de l'invention, la pale de brassage est monobloc.

Selon un mode de réalisation de l'invention, le système d'entraînement magnétique comporte une pluralité de deuxièmes dispositifs magnétiques permanents, chaque deuxième dispositif magnétique permanent étant fixé à la portion d'extrémité d'un bras de brassage respectif. Ces dispositions permettent d'augmenter sensiblement le couple magnétique transmis à la pale de brassage, et également d'assurer une rotation concentrique de la pale de brassage dans la cuve de cuisson, ce qui évite les éventuels « décrochages magnétiques » entre les premiers et deuxièmes dispositifs magnétiques permanents lors de brassages d'aliments en forte quantité.

De façon avantageuse, le nombre de premiers dispositifs magnétiques permanents est identique ou supérieur au nombre de bras de brassage. Selon un mode de réalisation de l'invention, la portion d'extrémité de chaque bras de brassage est équipée d'un deuxième dispositif magnétique permanent. Selon un autre mode de réalisation de l'invention, le nombre de deuxièmes dispositifs magnétiques permanents est inférieur au nombre de bras de brassage, les portions d'extrémité d'uniquement une partie des bras de brassage étant équipées de deuxièmes dispositifs magnétiques permanents. Selon encore un autre mode de réalisation de l'invention, la portion d'extrémité d'un seul bras de brassage est équipée d'un deuxième dispositif magnétique permanent.

Selon un mode de réalisation de l'invention, le nombre de premiers dispositifs magnétiques permanents est identique au nombre de deuxièmes dispositifs magnétiques permanents.

Selon un mode de réalisation de l'invention, les premiers dispositifs magnétiques permanents sont configurés pour coopérer avec les deuxièmes dispositifs magnétiques permanents de manière à centrer la pale de brassage dans la cuve de cuisson.

Selon un mode de réalisation de l'invention, les premiers dispositifs magnétiques permanents sont configurés pour coopérer avec les deuxièmes dispositifs magnétiques permanents de manière à positionner automatiquement chacun des deuxièmes dispositifs magnétiques permanents en regard d'un premier dispositif magnétique permanent complémentaire lorsque la pale de brassage est disposée dans la cuve de cuisson. Ainsi, lors de l'insertion de la pale de brassage dans la cuve de cuisson, les deuxièmes dispositifs magnétiques permanents situés sur les bras de brassage sont attirés par les premiers dispositifs magnétiques permanents prévus sur la couronne périphérique, et permettent de mettre en position automatiquement les différents bras de brassage.

Selon un mode de réalisation de l'invention, le nombre de premiers dispositifs magnétiques permanents fixés à la couronne périphérique est différent du nombre de deuxièmes dispositifs magnétiques permanents, et par exemple supérieur au nombre de deuxièmes dispositifs magnétiques permanents.

Selon un mode de réalisation de l'invention, chaque deuxième dispositif magnétique permanent est configuré pour coopérer avec un premier dispositif magnétique permanent complémentaire.

Selon un mode de réalisation de l'invention, la couronne périphérique comporte une pluralité de dents réparties sur une surface périphérique de la couronne périphérique.

Selon un mode de réalisation de l'invention, le système d'entraînement magnétique comporte un pignon qui est couplé en rotation à un arbre de sortie du moteur d'entraînement, les dents de la couronne périphérique étant configurées pour s'engrener avec des dentures prévues sur le pignon.

Selon un mode de réalisation de l'invention, le moteur d'entraînement est disposé en périphérie de la paroi latérale de la cuve de cuisson. Ces dispositions permettent, lorsque l'appareil de cuisson électrique est équipé d'un dispositif de chauffage, d'éloigner le moteur d'entraînement du dispositif de chauffage.

Selon un autre mode de réalisation, le moteur d'entraînement est disposé sous le fond de la cuve de cuisson.

Selon un mode de réalisation de l'invention, le moteur d'entraînement présente un axe de rotation qui est positionné sensiblement parallèlement à un axe central de la couronne périphérique.

Selon un autre mode de réalisation, le moteur d'entrainement est disposé sous la cuve de cuisson. Ces dispositions permettent de conférer un autre design à l'appareil de cuisson électrique.

Selon un mode de réalisation de l'invention, le moteur d'entrainement présente un axe de rotation qui est positionné sensiblement transversalement à un axe central de la couronne périphérique.

Selon un mode de réalisation de l'invention, l'appareil de cuisson électrique comporte un dispositif de chauffage qui est disposé dans le boîtier et qui est configuré pour chauffer la cuve de cuisson, par exemple au moins par conduction, la couronne périphérique étant décalée verticalement par rapport au dispositif de chauffage. Ces dispositions permettent de décaler le ou les premier(s) dispositif(s) magnétique(s) permanent(s) du dispositif de chauffage, et donc de conserver la force d'attraction magnétique exercée par le ou chaque premier dispositif magnétique permanent sur le deuxième dispositif magnétique permanent complémentaire. Le dispositif de chauffage peut par exemple comprendre un élément résistif chauffant.

Selon un mode de réalisation de l'invention, le dispositif de chauffage est disposé en dessous de la paroi de fond de la cuve de cuisson.

Selon un mode de réalisation de l'invention, la couronne périphérique est plus proche de la paroi de fond de la cuve de cuisson que de l'ouverture d'accès de la cuve de cuisson.

Selon un mode de réalisation de l'invention, l'appareil de cuisson électrique comporte un élément de couvercle déplaçable entre une position ouverte dans laquelle le couvercle autorise un accès à la cuve de cuisson et une position fermée dans laquelle le couvercle empêche l'accès à la cuve de cuisson. Le couvercle peut par exemple être monté pivotant sur le boîtier.

Selon un mode de réalisation de l'invention, la pale de brassage est amovible.

Selon un mode de réalisation de l'invention, la paroi de fond de la cuve de cuisson est globalement lisse.

Selon un mode de réalisation de l'invention, l'appareil de cuisson électrique comporte une partie de support configurée pour supporter de manière coulissante la couronne périphérique. De façon avantageuse, la partie de support comporte une pluralité d'éléments de roulement sur lesquels repose la couronne périphérique. Selon une variante de réalisation de l'invention, la partie de support pourrait comporter un roulement à bille, un roulement à rouleaux ou un palier.

Selon un mode de réalisation de l'invention, la pale de brassage comporte un unique bras de brassage.

Selon un mode de réalisation, la pale comprend des éléments spécifiques pour minimiser les frottements de la pale avec le fond et/ou le bord de la cuve de cuisson.

De tels éléments spécifiques peuvent comprendre des inserts réalisés dans un matériaux à coefficient de frottement réduit, par exemple du silicone ou bien un revêtement à coefficient de frottement réduit, par exemple du polytétrafluoroéthylène communément désigné sous le sigle PTFE.

Selon un mode de réalisation, la paroi latérale de la cuve de cuisson comprend un bossage intérieur, la portion d'extrémité de la pale de brassage étant agencée pour enjamber le bossage intérieur.

Selon un mode de réalisation de l'invention, l'appareil de cuisson électrique est un appareil de cuisson électrique sous pression, tel qu'un autocuiseur électrique ou un multi-cuiseur électrique avec pression.

La présente invention a également pour objet un procédé d'utilisation d'un appareil de cuisson électrique tel que décrit précédemment comprenant les étapes suivantes :
- insérer la pale de brassage à l'intérieur de la cuve de cuisson ;
- générer une pression dans la cuve de cuisson supérieure à la pression atmosphérique,
- entraîner en rotation la pale de brassage à l'aide du système d'entraînement magnétique.

Ce procédé permet d'homogénéiser le contenu de la cuve de cuisson sans intervention directe de l'utilisateur sur le contenu lorsque l'appareil de cuisson électrique est placé dans un mode de fonctionnement sous pression.

### Brève description des figures

L'invention sera bien comprise à l'aide de la description qui suit en référence aux dessins schématiques annexés représentant, à titre d'exemple non limitatif, une forme d'exécution de cet appareil de cuisson électrique.
[Fig 1] est une vue en coupe longitudinale d'un appareil de cuisson électrique selon la présente invention.
[Fig 2] est une vue partielle de dessus de l'appareil de cuisson électrique de la figure 1.
[Fig 3] est une vue schématique sur l'agencement du premier dispositif magnétique permanent et le deuxième dispositif magnétique permanent du système d'entraînement magnétique.
[Fig 4] est une vue de profil de l'extrémité de la pale de brassage et d'une partie de la paroi latérale de la cuve de cuisson.

### Description détaillée

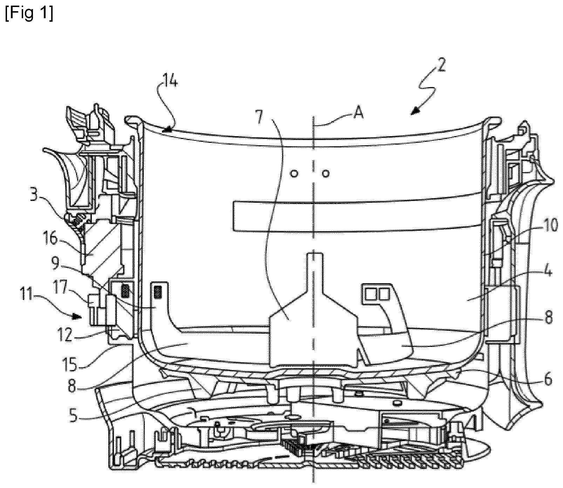

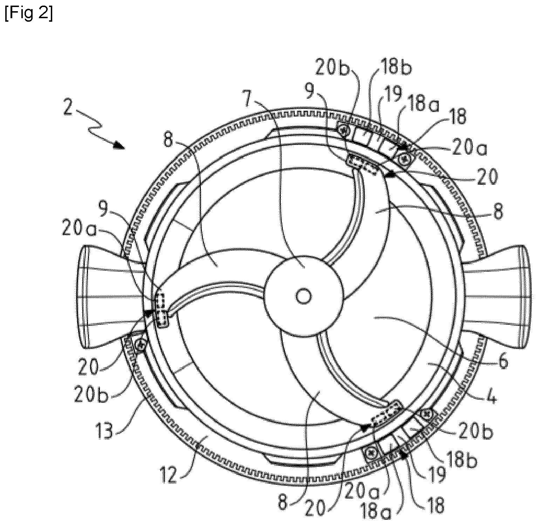

Les figures 1 et 2 représentent un appareil de cuisson électrique 2, et plus particulièrement un appareil de cuisson sous pression électrique, tel qu'un autocuiseur électrique ou un multi-cuiseur électrique avec pression.

L'appareil de cuisson électrique 2 comprend un boîtier 3 comportant une cuve de cuisson 4 configurée pour recevoir des aliments à cuire, et un couvercle (non visible sur les figures) déplaçable entre une position ouverte dans laquelle le couvercle autorise un accès à la cuve de cuisson 4 et une position fermée dans laquelle le couvercle empêche l'accès à la cuve de cuisson 4. Selon le mode de réalisation représenté sur les figures, la cuve de cuisson 4 présente une section transversale sensiblement circulaire.

L'appareil de cuisson électrique 2 comprend en outre un dispositif de chauffage 5 qui est disposé dans le boîtier 3 et qui est configuré pour chauffer la cuve de cuisson 4 par conduction. Néanmoins, d'autres types de chauffage pourraient être envisagés, notamment par induction ou bien par rayonnement. Le dispositif de chauffage 5 peut par exemple comporter un élément résistif chauffant et est avantageusement disposé en dessous d'une paroi de fond 6 de la cuve de cuisson 4.

L'appareil de cuisson électrique 2 comprend également une pale de brassage 7 qui est amovible et qui est montée mobile en rotation dans la cuve de cuisson 4. Selon le mode de réalisation représenté sur les figures, la pale de brassage 7 est monobloc et comporte une pluralité de bras de brassage 8, et par exemple trois bras de brassage 8, qui sont configurés pour brasser des aliments contenus dans la cuve de cuisson 4.

Les bras de brassage 8 sont décalés angulairement les uns par rapport aux autres. De façon avantageuse, les bras de brassage 8 sont régulièrement répartis autour d'un axe de rotation A de la pale de brassage 7.

Chaque bras de brassage 8 comporte plus particulièrement une portion d'extrémité 9 qui est configurée pour s'étendre à proximité ou au contact d'une surface interne d'une paroi latérale 10 de la cuve de cuisson 4.

L'appareil de cuisson électrique 2 comprend de plus un système d'entraînement magnétique 11 qui est configuré pour entraîner en rotation la pale de brassage 7.

Le système d'entraînement magnétique 11 comprend une couronne périphérique 12 qui s'étend autour de la paroi latérale 10 de la cuve de cuisson 4 et qui est décalée verticalement par rapport au dispositif de chauffage 5. De façon avantageuse, l'axe central de la couronne périphérique 12 est sensiblement confondu avec l'axe de rotation de la pale de brassage 7, et est sensiblement vertical lorsque l'appareil de cuisson électrique 2 repose sur un support horizontal.

La couronne périphérique 12 comporte une pluralité de dents 13 réparties sur une surface périphérique externe de la couronne périphérique 12. De façon avantageuse, la couronne périphérique 12 est plus proche de la paroi de fond 6 de la cuve de cuisson 4 que d'une ouverture d'accès 14 de la cuve de cuisson 4 à travers laquelle des aliments peuvent être introduits dans la cuve de cuisson 4. Néanmoins, toute autre configuration reste possible, notamment avec la couronne périphérique 12 plus proche de l'ouverture d'accès 14 de la cuve de cuisson 4 que de la paroi de fond 6 de la cuve de cuisson 4 dans le cas où le couvercle comporte des moyens de chauffage.

L'appareil de cuisson électrique 2 comporte en outre une partie de support 15 qui est configurée pour supporter de manière coulissante la couronne périphérique 12. De façon avantageuse, la partie de support 15 comporte une pluralité de billes sur lesquelles repose la couronne périphérique 12. Il est également possible de prévoir des roulements à billes, des roulements à rouleaux ou bien encore des paliers. Il est également envisageable de simplement mettre en contact la partie de support 15 et la couronne périphérique 12 et de les faire glisser l'une sur l'autre en favorisant l'utilisation de deux matériaux à coefficient de frottement réduit.

Le système d'entraînement magnétique 11 comprend également un moteur d'entraînement 16 configuré pour entraîner en rotation la couronne périphérique 12 autour de la paroi latérale 10 de la cuve de cuisson 4. Le moteur d'entraînement 16 est avantageusement disposé en périphérie de la paroi latérale 10 de la cuve de cuisson 4, et présente un axe de rotation qui est sensiblement parallèle à l'axe central de la couronne périphérique 12. Il peut également être envisagé de disposer ce moteur d'entrainement 16 en dessous de la cuve de cuisson 4 selon l'encombrement que l'on entend conférer à l'appareil de cuisson électrique 2.

Selon le mode de réalisation représenté sur les figures, le système d'entraînement magnétique 11 comporte un pignon 17 qui est couplé en rotation à un arbre de sortie du moteur d'entraînement 16 et qui comporte des dentures configurées pour s'engrener avec les dents 13 de la couronne périphérique 12.

Le système d'entraînement magnétique 11 comprend une pluralité de premiers dispositifs magnétiques permanents 18 qui sont fixés à la couronne périphérique 12 et qui sont décalés angulairement les uns par rapport aux autres. Chacun des premiers dispositifs magnétiques permanents 18 peut par exemple être disposé à proximité de la paroi de fond 6 de la cuve de cuisson 4, ou être décalé verticalement par rapport à la paroi de fond 6 de la cuve de cuisson 4.

Selon un mode de réalisation de l'invention, la couronne périphérique 12 comporte plusieurs logements internes 19 qui sont décalés angulairement les uns des autres et dans chacun desquels est disposé un premier dispositif magnétique permanent 18. Chaque logement interne 19 peut par exemple déboucher dans la surface supérieure de la couronne périphérique 12 et être configuré pour permettre une insertion d'un premier dispositif magnétique permanent 18 dans ledit logement interne 19 après fabrication de la couronne périphérique 12. Le premier dispositif magnétique permanent peut également avoir été surmoulé dans la couronne périphérique 12 lors de son moulage par injection.

Le système d'entraînement magnétique 11 comprend de plus une pluralité de deuxièmes dispositifs magnétiques permanents 20 qui sont configurés pour être disposés dans la cuve de cuisson 4.

Chacun des deuxièmes dispositifs magnétiques permanents 20 est fixé à la portion d'extrémité 9 d'un bras de brassage 8 complémentaire. A cet effet, la portion d'extrémité 9 de chaque bras de brassage 8 comporte un logement de réception dans lequel est logé le deuxième dispositif magnétique permanent 20 complémentaire. De façon avantageuse, le deuxième dispositif magnétique permanent 20 associé à chaque bras de brassage 8 pourrait être disposé dans un insert monté amovible dans le logement de réception complémentaire. Selon un mode de réalisation de l'invention, chaque logement de réception est hermétique. Le deuxième dispositif magnétique permanent 20 peut également avoir été surmoulé dans le bras de brassage 8 lors de son moulage par injection.

Selon le mode de réalisation représenté sur les figures, le nombre de deuxièmes dispositifs magnétiques permanents 20 est identique au nombre de bras de brassage 8, et le nombre de deuxièmes dispositifs magnétiques permanents 20 est identique au nombre de premiers dispositifs magnétiques permanents 18.

Les premiers dispositifs magnétiques permanents 18 et les deuxièmes dispositifs magnétiques permanents 20 sont agencés de telle sorte que chaque premier dispositif magnétique permanent 18 est configuré pour exercer une force d'attraction magnétique sur un deuxième dispositif magnétique permanent 20 complémentaire lorsque ledit premier dispositif magnétique permanent 18 est placé en regard dudit deuxième dispositif magnétique permanent 20 complémentaire. Ainsi, le système d'entraînement magnétique 11 est configuré pour entraîner en rotation les bras de brassage 8 lorsque chaque deuxième dispositif magnétique permanent 20 est placé en regard d'un premier dispositif magnétique permanent 18 complémentaire et lorsque le moteur d'entraînement 16 entraîne en rotation la couronne périphérique 12.

Selon un mode de réalisation de l'invention, les premiers et deuxièmes dispositifs magnétiques permanents 18, 20 sont agencés de telle sorte que la force d'attraction magnétique mutuelle exercée entre chaque premier dispositif magnétique permanent 18 et chaque deuxième dispositif magnétique permanent 20 placés en regard comprend une composante sensiblement radiale par rapport à l'axe de rotation A de la pale de brassage 7.

Par ailleurs, les premiers et deuxièmes dispositifs magnétiques permanents 18, 20 sont agencés de telle sorte que la force d'attraction magnétique mutuelle exercée entre chaque premier dispositif magnétique permanent 18 et chaque deuxième dispositif magnétique permanent 20 placé en regard dudit premier dispositif magnétique permanent 18 comprend une composante permettant de plaquer le bras de brassage 8 respectif contre la paroi de fond 6 de la cuve de cuisson 4.

De façon avantageuse, les premiers dispositifs magnétiques permanents 18 sont configurés pour coopérer avec les deuxièmes dispositifs magnétiques permanents 20 de manière à centrer la pale de brassage 7 dans la cuve de cuisson 4, et de manière à positionner automatiquement chacun des deuxièmes dispositifs magnétiques permanents 20 en regard d'un premier dispositif magnétique permanent 18 complémentaire lorsque la pale de brassage 7 est disposée dans la cuve de cuisson 4.

Selon le mode de réalisation représenté sur les figures, chaque premier dispositif magnétique permanent 18 comporte deux premiers aimants permanents 18a, 18b dont l'axe d'aimantation est orienté sensiblement radialement par rapport à l'axe de rotation A de la couronne périphérique 12 et qui sont agencés en opposition de pôle.

Le deuxième dispositif magnétique permanent 20 comporte quant à lui deux deuxièmes aimants permanents 20a, 20b dont l'axe d'aimantation est orienté radialement par rapport à l'axe de rotation A de la pale de brassage 7 et qui sont agencés en opposition de pôle.

Les deux premiers aimants permanents 18a, 18b du premier dispositif magnétique permanent 18 sont chacun agencé pour être disposé en regard et en opposition de pôle d'un des deux deuxièmes aimants permanents 20a, 20b du deuxième dispositif magnétique permanent 20.

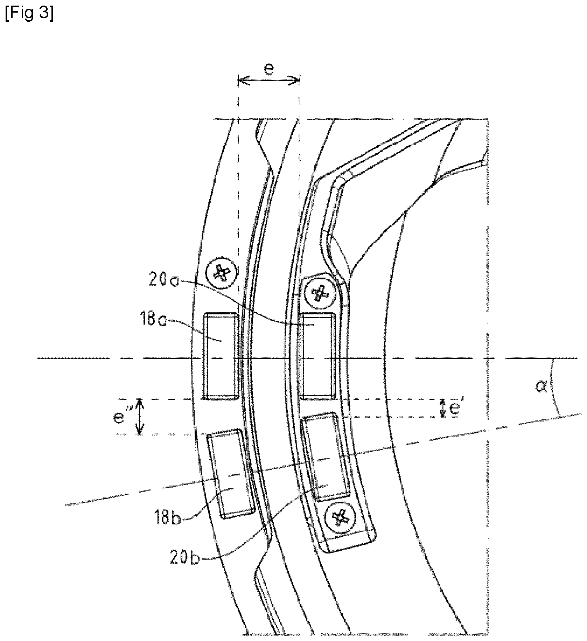

Comme illustré sur la figure 3, la distance de l'entrefer e' entre les deux deuxièmes aimants permanents 20a, 20b du deuxième dispositif magnétique permanent 20 est supérieure ou égal à la moitié de l'entrefer e entre un deuxième aimant permanent 20a, 20b du deuxième dispositif magnétique permanent 20 et un premier aimant permanent 18a, 18b du premier dispositif magnétique permanent 18. Ainsi, on minimise les flux de fuite entre les deux deuxièmes aimants permanents 20a, 20b. Toutefois, en cas d'inégalité la distance de l'entrefer e' ne doit pas être trop grande au-delà de la moitié de l'entrefer e entre un deuxième aimant permanent 20a, 20b du deuxième dispositif magnétique permanent 20 et un premier aimant permanent 18a, 18b du premier dispositif magnétique permanent 18, car sinon le flux risquerait de se reboucler davantage sur un même deuxième aimant permanent 20a, 20b. Le meilleur compromis consiste à avoir une égalité entre la distance de l'entrefer e' entre les deux deuxièmes aimants permanents 20a, 20b du deuxième dispositif magnétique permanent 20 et la moitié de l'entrefer e entre un deuxième aimant permanent 20a, 20b du deuxième dispositif magnétique permanent 20 et un premier aimant permanent 18a, 18b du premier dispositif magnétique permanent 18.

Afin de maximiser encore davantage le flux magnétique utile entre le premier dispositif magnétique 18 et le deuxième dispositif magnétique 20, un empilement de tôle peut être adossé à une face de chaque aimant d'un dispositif magnétique permanent 18, 20 opposée à un aimant de l'autre dispositif magnétique permanent 18, 20.

De tels empilements de tôle permettent d'économiser davantage de volume d'aimants à volume de logement interne 19 ou logement de réception constant.

L'entrefer e" entre les deux premiers aimants permanents 18a, 18b du premier dispositif magnétique permanent 18 résulte quant à lui de la conservation du même écart angulaire que l'écart angulaire a entre les deux deuxièmes aimants permanents 20a, 20b du deuxième dispositif magnétique permanent 20, ces écarts angulaires étant mesurés entre deux droites sécantes au niveau de l'axe de rotation A de la pale de brassage 7 et traversant le centre des premiers et deuxièmes aimants permanents 18a, 18, 20a, 20b respectivement du premier dispositif magnétique permanent 18 et du deuxième dispositif magnétique permanent 20.

Ces dispositions permettent d'orienter les flux magnétiques des deux deuxièmes aimants 20a, 20b du deuxième dispositif magnétique permanent 20 en direction des premiers aimants permanents 18a, 18b du premier dispositif magnétique permanent 18 et réciproquement en défavorisant le rebouclage des flux magnétiques sur un même aimant permanent.

Une telle configuration de chaque premier dispositif magnétique permanent 18 et de chaque deuxième dispositif magnétique permanent 20 permet d'augmenter la force d'attraction entre le premier dispositif magnétique permanent 18 et le deuxième dispositif magnétique permanent 20 complémentaire et donc d'augmenter le couple transmis à la pale de brassage 7. En effet, lorsque les deux deuxièmes aimants permanents 20a, 20b d'un deuxième dispositif magnétique permanent 20 sont situés en regard du premier dispositif magnétique permanent 18 complémentaire, et notamment centré axialement par rapport aux deux premiers aimants permanents 18a, 18b complémentaires, alors les deux premiers aimants permanents 18a, 18b et les deux deuxièmes aimants permanents 20a, 20b complémentaires forment un circuit magnétique de moindre énergie pour le rebouclage du flux magnétique.

Selon une variante de réalisation de l'invention non représentée sur les figures, chaque premier dispositif magnétique permanent 18 et chaque deuxième dispositif magnétique permanent 20 pourraient comporter respectivement un unique premier aimant permanent et un unique deuxième aimant permanent.

Les premiers et deuxièmes aimants permanents 18a, 18b, 20a, 20b des premiers et deuxièmes dispositifs magnétiques permanents 18, 20 peuvent être réalisés par exemple en néodyme ou en ferrite.

Selon un autre mode de réalisation de l'invention non représenté sur les figures, au moins deux bras parmi la pluralité de bras ont des formes différentes.

Cette disposition permet d'optimiser la forme d'un bras pour le brassage d'aliments de petite dimension et d'optimiser la forme d'un autre bras pour le brassage d'aliments de plus grande dimension.

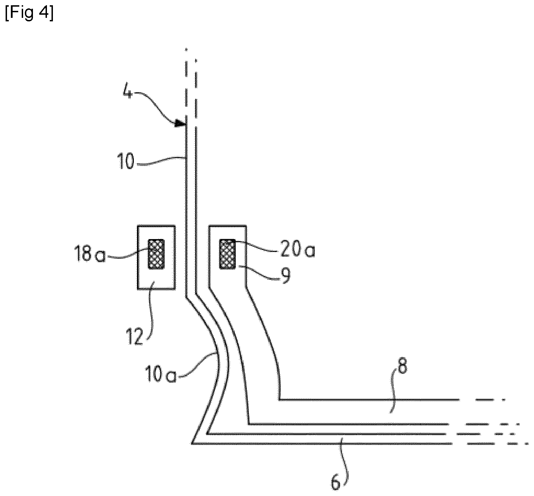

Par ailleurs, comme illustré sur la figure 4, la paroi latérale de la cuve de cuisson 4 comprend un bossage intérieur 10a et la portion d'extrémité de la pale de brassage 7 étant agencée pour enjamber le bossage intérieur 10a.

Ce bossage intérieur 10a permet à la pale de brassage 7 de réaliser correctement sa fonction de brassage.

Le fonctionnement de l'appareil de cuisson électrique 2 selon la présente invention est décrit ci-après de manière succincte.

Lorsqu'un consommateur souhaite réaliser une recette nécessitant un brassage des aliments à cuire, le consommateur insère la pale de brassage 7 à l'intérieur de la cuve de cuisson 4. Les deuxièmes dispositifs magnétiques permanents 20 situés dans les portions d'extrémité 9 des bras de brassage 8 sont attirés par les premiers dispositifs magnétiques permanents 18 de la couronne périphérique 12 et permettent de centrer automatiquement la pale de brassage 7 dans la cuve de cuisson 4. Les aliments sont ensuite introduits dans la cuve de cuisson 4, puis en suivant le pas à pas de la recette choisie, le moteur d'entraînement 16 est alimenté électriquement de façon automatique lors de la phase de cuisson et/ou lors de la phase de dorage des aliments, et met en rotation la couronne périphérique 12 via l'intermédiaire du pignon 17, ce qui entraîne une rotation des bras de brassage 8 du fait de la coopération magnétique entre les premiers et deuxièmes dispositifs magnétiques permanents 18, 20.

Selon un mode de réalisation de l'invention non représenté sur les figures, la pale de brassage 7 comporte un unique bras de brassage 8, et la cuve de cuisson 4 comporte un pion de centrage qui s'étend à partir de la paroi de fond 6 de la cuve de cuisson 4 et qui est configuré pour coopérer avec la pale de brassage 7 de manière à centrer la pale de brassage 7 dans la cuve de cuisson 4.

Ainsi, un utilisateur est en mesure de mettre en oeuvre un procédé d'utilisation d'un appareil de cuisson électrique 2 tel que décrit précédemment comprenant les étapes suivantes :
- insérer la pale de brassage 7 à l'intérieur de la cuve de cuisson 4 ;
- générer une pression dans la cuve de cuisson 4 supérieure à la pression atmosphérique,
- entraîner en rotation la pale de brassage 7 à l'aide du système d'entraînement magnétique 11.
Ce procédé permet d'homogénéiser le contenu de la cuve de cuisson 4 sans intervention directe de l'utilisateur sur le contenu lorsque l'appareil de cuisson électrique 2 est placé dans un mode de fonctionnement sous pression.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

C'est ainsi que les premiers dispositifs magnétiques permanents 18 peuvent comprendre des aimants permanents agencés pour interagir avec des éléments ferromagnétiques des deuxièmes dispositifs magnétiques permanents 20, ou inversement.

Les premiers dispositifs magnétiques permanents 18 peuvent à la fois comprendre des aimants permanents agencés pour interagir avec des éléments ferromagnétiques des deuxièmes dispositifs magnétiques permanents 20 et des éléments ferromagnétiques agencés pour interagir avec des aimants permanents des deuxièmes dispositifs magnétiques permanents 20.

## Revendications

1. Appareil de cuisson électrique (2) comprenant :
- un boîtier (3) comportant une cuve de cuisson (4) configurée pour recevoir des aliments à cuire,
- une pale de brassage (7) montée mobile en rotation dans la cuve de cuisson (4), et
- un système d'entraînement magnétique (11) configuré pour entraîner en rotation la pale de brassage (7), le système d'entraînement magnétique (11) comprenant une couronne périphérique (12) s'étendant autour de la paroi latérale (10) de la cuve de cuisson (4), un premier dispositif magnétique permanent (18) fixé à la couronne périphérique (12), un deuxième dispositif magnétique permanent (20) configuré pour coopérer avec le premier dispositif magnétique permanent (18), et un moteur d'entraînement (16) configuré pour entraîner en rotation la couronne périphérique (12) autour de la paroi latérale (10) de la cuve de cuisson (4),
le système d'entraînement magnétique (11) étant configuré pour entraîner en rotation la pale de brassage (7) lorsque le deuxième dispositif magnétique permanent (20) est placé en regard du premier dispositif magnétique permanent (18) et lorsque le moteur d'entraînement (16) entraîne en rotation la couronne périphérique (12), l'appareil de cuisson électrique étant **caractérisé en ce que** la pale de brassage (7) comporte au moins un bras de brassage (8) qui est configuré pour brasser des aliments contenus dans la cuve de cuisson (4), le bras de brassage (8) comportant une portion d'extrémité (9) configurée pour s'étendre à proximité ou au contact d'une paroi latérale (10) de la cuve de cuisson (4), et le deuxième dispositif magnétique permanent (20) fixé à la portion d'extrémité (9) du bras de brassage (8).

2. Appareil de cuisson électrique (2) selon la revendication 1, dans lequel le premier dispositif magnétique permanent (18) comporte un ou plusieurs premiers aimants permanents (18a, 18b), le cas échéant répartis sur la couronne périphérique (12) de manière décalés angulairement les uns par rapport aux autres.

3. Appareil de cuisson électrique (2) selon l'une des revendications 1 ou 2, dans lequel le deuxième dispositif magnétique permanent (20) comporte un même nombre d'aimants que le premier dispositif magnétique permanent.

4. Appareil de cuisson électrique (2) selon la revendication 1, dans lequel le premier dispositif magnétique permanent (18) et le deuxième dispositif magnétique permanent (20) sont agencés de telle sorte que la force d'attraction magnétique mutuelle exercée par le premier dispositif magnétique permanent (18) et le deuxième dispositif magnétique permanent (20) placé en regard du premier dispositif magnétique permanent (18) comprend une composante permettant de plaquer le bras de brassage (8) contre une paroi de fond (6) de la cuve de cuisson (4).

5. Appareil de cuisson électrique (2) selon l'une quelconque des revendications 1 à 4, dans lequel le premier dispositif magnétique permanent (18) comporte un unique premier aimant permanent (18a) et le deuxième dispositif magnétique permanent (20) comporte un unique deuxième aimant permanent (20a), le premier aimant permanent (18a) et le deuxième aimant permanent (20a) présentant un axe d'aimantation orienté sensiblement radialement par rapport à l'axe de rotation (A) de la couronne périphérique (12) ou de rotation de la pale de brassage (7), le premier aimant permanent (18a) et le deuxième aimant permanent (20a) étant disposés en opposition de pôle.

6. Appareil de cuisson électrique (2) selon l'une quelconque des revendications 1 à 4, dans lequel le premier dispositif magnétique permanent (18) comporte deux premiers aimants permanents (18a, 18b), dont l'axe d'aimantation est orienté sensiblement radialement par rapport à l'axe de rotation (A) de la couronne périphérique (12) et qui sont agencés en opposition de pôle, et le deuxième dispositif magnétique permanent (20) comporte deux deuxième aimants permanents (20a, 20b) dont l'axe d'aimantation est orienté radialement par rapport à l'axe de rotation (A) de la pale de brassage (7) et qui sont agencés en opposition de pôle, les deux premiers aimants permanents (18a, 18b) du premier dispositif magnétique permanent (18) étant chacun agencé pour être disposé en regard et en opposition de pôle d'un des deux deuxièmes aimants permanents (20a, 20b) du deuxième dispositif magnétique permanent (20).

7. Appareil de cuisson électrique (2) selon la revendication 6, dans lequel la distance de l'entrefer (e') entre les deux deuxièmes aimants permanents (20a, 20b) du deuxième dispositif magnétique permanent (20) est supérieure ou égale à la moitié de l'entrefer (e) entre un deuxième aimant permanent (20a, 20b) du deuxième dispositif magnétique permanent (20) et un premier aimant permanent (18a, 18b) du premier dispositif magnétique permanent (18).

8. Appareil de cuisson électrique (2) selon l'une quelconque des revendications 1 à 7, dans lequel le système d'entraînement magnétique (11) comporte une pluralité de premiers dispositifs magnétiques permanents (18) qui sont fixés à la couronne périphérique (12) et qui sont décalés angulairement les uns par rapport aux autres.

9. Appareil de cuisson électrique (2) selon l'une quelconque des revendications 1 à 8, dans lequel la pale de brassage (7) comporte une pluralité de bras de brassage (8) qui sont configurés pour brasser des aliments contenus dans la cuve de cuisson (4), chaque bras de brassage (8) comportant une portion d'extrémité (9) configurée pour s'étendre à proximité ou au contact de la paroi latérale (10) de la cuve de cuisson (4).

10. Appareil de cuisson électrique (2) selon la revendication 9, dans lequel au moins deux bras parmi la pluralité de bras ont des formes différentes.

11. Appareil de cuisson électrique (2) selon l'une des revendications 9 ou 10, dans lequel le système d'entraînement magnétique (11) comporte une pluralité de deuxièmes dispositifs magnétiques permanents (20), chaque deuxième dispositif magnétique permanent (20) étant fixé à la portion d'extrémité (9) d'un bras de brassage (8) respectif.

12. Appareil de cuisson électrique (2) selon les revendications 8 et 11, dans lequel le nombre de premiers dispositifs magnétiques permanents (18) est identique ou supérieur au nombre de bras de brassage (8).

13. Appareil de cuisson électrique (2) selon la revendication 12, dans lequel les premiers dispositifs magnétiques permanents (18) sont configurés pour coopérer avec les deuxièmes dispositifs magnétiques permanents (20) de manière à positionner automatiquement chacun des deuxièmes dispositifs magnétiques permanents (20) en regard d'un premier dispositif magnétique permanent (18) complémentaire lorsque la pale de brassage (7) est disposée dans la cuve de cuisson (4).

14. Appareil de cuisson électrique (2) selon l'une quelconque des revendications 1 à 13, dans lequel le moteur d'entraînement (16) est disposé en périphérie de la paroi latérale (10) de la cuve de cuisson (4) ou bien sous le fond de la cuve de cuisson (4).

15. Appareil de cuisson électrique (2) selon l'une quelconque des revendications 1 à 14, la paroi latérale (10) de la cuve de cuisson (4) comprenant un bossage intérieur (10a), la portion d'extrémité (9) de la pale de brassage (7) étant agencée pour enjamber le bossage intérieur (10a).

16. Procédé d'utilisation d'un appareil de cuisson électrique (2) selon l'une des revendications 1 à 15 comprenant les étapes suivantes :
- insérer la pale de brassage (7) à l'intérieur de la cuve de cuisson (4) ;
- générer une pression dans la cuve de cuisson (4) supérieure à la pression atmosphérique,
- entraîner en rotation la pale de brassage (7) à l'aide du système d'entraînement magnétique (11).

## Patentansprüche

1. Elektrische Kocheinrichtung (2) umfassend:
- ein Gehäuse (3), das einen Kochtopf (4) aufweist, der zum Aufnehmen von zu kochenden Lebensmitteln konfiguriert ist,
- eine Rührschaufel (7), die drehbeweglich im Kochtopf (4) montiert ist, und
- ein magnetisches Antriebssystem (11), das zum Drehantrieb der Rührschaufel (7) konfiguriert ist, wobei das magnetische Antriebssystem (11) einen Umfangskranz (12), der sich um die seitliche Wand (10) des Kochtopfs (4) erstreckt, eine erste Permanentmagnetvorrichtung (18), die an dem Umfangskranz (12) befestigt ist, eine zweite Permanentmagnetvorrichtung (20), die zum Zusammenwirken mit der ersten Permanentmagnetvorrichtung (18) konfiguriert ist, und einen Antriebsmotor (16) umfasst, der zum Drehantrieb des Umfangskranzes (12) um die seitliche Wand (10) des Kochtopfs (4) konfiguriert ist,
wobei das magnetische Antriebssystem (11) zum Drehantrieb der Rührschaufel (7) konfiguriert ist, wenn die zweite Permanentmagnetvorrichtung (20) gegenüber der ersten Permanentmagnetvorrichtung (18) platziert ist, und wenn der Antriebsmotor (16) den Umfangskranz (12) in Drehung versetzt, wobei die elektrische Kocheinrichtung **dadurch gekennzeichnet ist, dass** die Rührschaufel (7) mindestens einen Rührarm (8) aufweist, der zum Rühren von in dem Kochtopf (4) enthaltenen Lebensmitteln konfiguriert ist, wobei der Rührarm (8) einen Endabschnitt (9) aufweist, der konfiguriert ist, um sich in der Nähe einer seitlichen Wand (10) des Kochtopfs (4) oder in Kontakt mit dieser zu erstrecken, und die zweite Permanentmagnetvorrichtung (20) an dem Endabschnitt (9) des Rührarms (8) befestigt ist.

2. Elektrische Kocheinrichtung (2) nach Anspruch 1, wobei die erste Permanentmagnetvorrichtung (18) einen oder mehrere erste Permanentmagnete (18a, 18b) aufweist, die gegebenenfalls auf dem Umfangskranz (12) winkelversetzt zueinander verteilt sind.

3. Elektrische Kocheinrichtung (2) nach einem der Ansprüche 1 oder 2, wobei die zweite Permanentmagnetvorrichtung (20) eine gleiche Anzahl von Magneten aufweist wie die erste Permanentmagnetvorrichtung.

4. Elektrische Kocheinrichtung (2) nach Anspruch 1, wobei die erste Permanentmagnetvorrichtung (18) und die zweite Permanentmagnetvorrichtung (20) derart angeordnet sind, dass die gegenseitige magnetische Anziehungskraft, die von der ersten Permanentmagnetvorrichtung (18) und der zweiten Permanentmagnetvorrichtung (20) ausgeübt wird, die gegenüber der ersten Permanentmagnetvorrichtung (18) platziert ist, eine Komponente umfasst, die es ermöglicht, den Rührarm (8) gegen eine Bodenwand (6) des Kochtopfs (4) zu drücken.

5. Elektrische Kocheinrichtung (2) nach einem der Ansprüche 1 bis 4, wobei die erste Permanentmagnetvorrichtung (18) einen einzigen ersten Permanentmagneten (18a) aufweist und die zweite Permanentmagnetvorrichtung (20) einen einzigen zweiten Permanentmagneten (20a) aufweist, wobei der erste Permanentmagnet (18a) und der zweite Permanentmagnet (20a) eine Magnetisierungsachse aufweisen, die im Wesentlichen radial in Bezug auf die Drehachse (A) des Umfangskranzes (12) oder die Drehachse des Rührschaufels (7) ausgerichtet ist, wobei der erste Permanentmagnet (18a) und der zweite Permanentmagnet (20a) polgegenüberliegend angeordnet sind.

6. Elektrische Kocheinrichtung (2) nach einem der Ansprüche 1 bis 4, wobei die erste Permanentmagnetvorrichtung (18) zwei erste Permanentmagnete (18a, 18b) aufweist, deren Magnetisierungsachse im Wesentlichen radial zur Drehachse (A) des Umfangskranzes (12) ausgerichtet ist und die polgegenüberliegend angeordnet sind, und die zweite Permanentmagnetvorrichtung (20) zwei zweite Permanentmagnete (20a, 20b) aufweist, deren Magnetisierungsachse radial in Bezug auf die Drehachse (A) der Rührschaufel (7) ausgerichtet ist und die polgegenüberliegend angeordnet sind, wobei die zwei ersten Permanentmagnete (18a, 18b) der ersten Permanentmagnetvorrichtung (18) jeweils so angeordnet sind, dass sie gegenüber und polgegenüberliegend zu einem der zwei zweiten Permanentmagnete (20a, 20b) der zweiten Permanentmagnetvorrichtung (20) angeordnet sind.

7. Elektrische Kocheinrichtung (2) nach Anspruch 6, wobei der Abstand des Luftspalts (e') zwischen den zwei zweiten Permanentmagneten (20a, 20b) der zweiten Permanentmagnetvorrichtung (20) größer als oder gleich der Hälfte des Luftspalts (e) zwischen einem zweiten Permanentmagneten (20a, 20b) der zweiten Permanentmagnetvorrichtung (20) und einem ersten Permanentmagneten (18a, 18b) der ersten Permanentmagnetvorrichtung (18) ist.

8. Elektrische Kocheinrichtung (2) nach einem der Ansprüche 1 bis 7, wobei das magnetische Antriebssystem (11) eine Vielzahl von ersten Permanentmagnetvorrichtungen (18) aufweist, die an dem Umfangskranz (12) befestigt sind und die winkelversetzt zueinander sind.

9. Elektrische Kocheinrichtung (2) nach einem der Ansprüche 1 bis 8, wobei die Rührschaufel (7) eine Vielzahl von Rührarmen (8) aufweist, die zum Rühren von in dem Kochtopfs (4) enthaltenen Lebensmitteln konfiguriert sind, wobei jeder Rührarm (8) einen Endabschnitt (9) aufweist, der konfiguriert ist, um sich in der Nähe einer seitlichen Wand (10) des Kochtopfs (4) oder in Kontakt mit dieser zu erstrecken.

10. Elektrische Kocheinrichtung (2) nach Anspruch 9, wobei mindestens zwei Arme aus der Vielzahl von Armen unterschiedliche Formen aufweisen.

11. Elektrische Kocheinrichtung (2) nach einem der Ansprüche 9 oder 10, wobei das magnetische Antriebssystem (11) eine Vielzahl von zweiten Permanentmagnetvorrichtungen (20) aufweist, wobei jede zweite Permanentmagnetvorrichtung (20) an dem Endabschnitt (9) eines jeweiligen Rührarms (8) befestigt ist.

12. Elektrische Kocheinrichtung (2) nach den Ansprüchen 8 und 11, wobei die Anzahl der ersten Permanentmagnetvorrichtungen (18) gleich oder größer als die Anzahl der Rührarme (8) ist.

13. Elektrische Kocheinrichtung (2) nach Anspruch 12, wobei die ersten Permanentmagnetvorrichtungen (18) zum Zusammenzuwirken mit den zweiten Permanentmagnetvorrichtungen (20) derart konfiguriert sind, dass sie jede der zweiten Permanentmagnetvorrichtungen (20) automatisch gegenüber einer komplementären ersten Permanentmagnetvorrichtung (18) positionieren, wenn die Rührschaufel (7) in dem Kochtopf (4) angeordnet ist.

14. Elektrische Kocheinrichtung (2) nach einem der Ansprüche 1 bis 13, wobei der Antriebsmotor (16) am Umfang der seitlichen Wand (10) des Kochtopfs (4) oder unter dem Boden des Kochtopfs (4) angeordnet ist.

15. Elektrische Kocheinrichtung (2) nach einem der Ansprüche 1 bis 14, wobei die seitliche Wand (10) des Kochtopfs (4) einen inneren Vorsprung (10a) umfasst, wobei der Endabschnitt (9) der Rührschaufel (7) zum Überspannen des inneren Vorsprungs (10a) angeordnet ist.

16. Verfahren zum Verwenden einer elektrischen Kocheinrichtung (2) nach einem der Ansprüche 1 bis 15, umfassend die folgenden Schritte:
- Einsetzen der Rührschaufel (7) in das Innere des Kochtopfs (4);
- Erzeugen eines Drucks im Kochtopf (4), der höher ist als der atmosphärische Druck,
- in Drehung versetzen der Rührschaufel (7) mithilfe des magnetischen Antriebssystems (11).

## Claims

1. Electric cooking apparatus (2) comprising:
- a housing (3) comprising a cooking vessel (4) configured to receive food to be cooked,
- a stirring blade (7) rotatably mounted in the cooking vessel (4), and
- a magnetic drive system (11) configured to rotate the stirring blade (7), the magnetic drive system (11) comprising a peripheral ring (12) extending around the side wall (10) of the cooking vessel (4), a first permanent magnetic device (18) attached to the peripheral ring (12), a second permanent magnetic device (20) configured to engage with the first permanent magnetic device (18), and a drive motor (16) configured to rotate the peripheral ring (12) about the side wall (10) of the cooking vessel (4),
the magnetic drive system (11) being configured to rotate the stirring blade (7) when the second permanent magnetic device (20) is positioned opposite the first permanent magnetic device (18) and when the drive motor (16) rotates the peripheral ring (12), the electric cooking apparatus being **characterised in that** the stirring blade (7) comprises at least one stirring arm (8) which is configured to stir food contained in the cooking vessel (4), the stirring arm (8) comprising an end portion (9) configured to extend close to or in contact with a side wall (10) of the cooking vessel (4), and the second permanent magnetic device (20) attached to the end portion (9) of the stirring arm (8).

2. Electric cooking apparatus (2) according to claim 1, wherein the first permanent magnetic device (18) comprises one or more first permanent magnets (18a, 18b) which may if necessary be distributed over the peripheral ring (12) so as to be angularly offset with respect to one another.

3. Electric cooking apparatus (2) according to any of claims 1 or 2, wherein the second permanent magnetic device (20) comprises the same number of magnets as the first permanent magnetic device.

4. Electric cooking apparatus (2) according to claim 1, wherein the first permanent magnetic device (18) and the second permanent magnetic device (20) are arranged such that the mutual magnetic attraction force exerted by the first permanent magnetic device (18) and the second permanent magnetic device (20) positioned opposite the first permanent magnetic device (18) comprises a component for pressing the stirring arm (8) against a bottom wall (6) of the cooking vessel (4).

5. Electric cooking apparatus (2) according to any of claims 1 to 4, wherein the first permanent magnetic device (18) comprises a single first permanent magnet (18a) and the second permanent magnetic device (20) comprises a single second permanent magnet (20a), the first permanent magnet (18a) and the second permanent magnet (20a) having an axis of magnetisation which is oriented substantially radially with respect to the axis of rotation (A) of the peripheral ring (12) or the axis of rotation of the stirring blade (7), the first permanent magnet (18a) and the second permanent magnet (20a) being arranged with their poles opposite one another.

6. Electric cooking apparatus (2) according to any of claims 1 to 4, wherein the first permanent magnetic device (18) comprises two first permanent magnets (18a, 18b) whose axis of magnetisation is oriented substantially radially with respect to the axis of rotation (A) of the peripheral ring (12) and which are arranged with their poles opposite one another, and the second permanent magnetic device (20) comprises two second permanent magnets (20a, 20b) whose axis of magnetisation is oriented radially with respect to the axis of rotation (A) of the stirring blade (7) and which are arranged with their poles opposite one another, the first two permanent magnets (18a, 18b) of the first permanent magnetic device (18) each being arranged so as to be opposite and in polar opposition to one of the two second permanent magnets (20a, 20b) of the second permanent magnetic device (20).

7. Electric cooking apparatus (2) according to claim 6, wherein the air gap distance (e') between the two second permanent magnets (20a, 20b) of the second permanent magnetic device (20) is greater than or equal to half the air gap (e) between a second permanent magnet (20a, 20b) of the second permanent magnetic device (20) and a first permanent magnet (18a, 18b) of the first permanent magnetic device (18).

8. Electric cooking apparatus (2) according to any of claims 1 to 7, wherein the magnetic drive system (11) comprises a plurality of first permanent magnetic devices (18) which are attached to the peripheral ring (12) and which are angularly offset from one another.

9. Electric cooking apparatus (2) according to any of claims 1 to 8, wherein the stirring blade (7) comprises a plurality of stirring arms (8) which are configured to stir food contained in the cooking vessel (4), each stirring arm (8) comprising an end portion (9) configured to extend close to or in contact with the side wall (10) of the cooking vessel (4).

10. Electric cooking apparatus (2) according to claim 9, wherein at least two of the plurality of arms have different shapes.

11. Electric cooking apparatus (2) according to any of claims 9 or 10, wherein the magnetic drive system (11) comprises a plurality of second permanent magnetic devices (20), each second permanent magnetic device (20) being attached to the end portion (9) of a respective stirring arm (8).

12. Electric cooking apparatus (2) according to claims 8 and 11, wherein the number of first permanent magnetic devices (18) is the same as or greater than the number of stirring arms (8).

13. Electric cooking apparatus (2) according to claim 12, wherein the first permanent magnetic devices (18) are configured to engage with the second permanent magnetic devices (20) so as to automatically position each of the second permanent magnetic devices (20) opposite a complementary first permanent magnetic device (18) when the stirring blade (7) is disposed in the cooking vessel (4).

14. Electric cooking apparatus (2) according to any of claims 1 to 13, wherein the drive motor (16) is disposed at the periphery of the side wall (10) of the cooking vessel (4) or under the bottom of the cooking vessel (4).

15. Electric cooking apparatus (2) according to any of claims 1 to 14, the side wall (10) of the cooking vessel (4) comprising an inner boss (10a), the end portion (9) of the stirring blade (7) being arranged so as to straddle the inner boss (10a).

16. Method of using an electric cooking apparatus (2) according to any of claims 1 to 15, comprising the following steps:
- inserting the stirring blade (7) into the cooking vessel (4);
- generating a pressure in the cooking vessel (4) that is higher than atmospheric pressure,
- rotating the stirring blade (7) by means of the magnetic drive system (11).
